# EUROPÄISCHE PATENTANMELDUNG

(11) **EP 3 633 914 A1**
(43) Veröffentlichungstag der Anmeldung: **08.04.2020**
(21) Anmeldenummer: 18198908.8
(22) Anmeldetag: 05.10.2018
(51) Int. Cl.: H04L 9/32

(54) **VERFAHREN UND SYSTEM ZUR NACHWEISBAREN DATENVERARBEITUNG UNTER ANWENDUNG VON OBFUSKATION**

(71) Anmelder: Siemens Aktiengesellschaft, 80333 München (DE)
(72) Erfinder: ZWANZGER, Johannes, 85579 Neubiberg (DE)

(57) **Zusammenfassung**

Verfahren zur nachweisbaren Datenverarbeitung wenigstens eines Funktionseingangsparameters (FI) mittels einer implementierten Funktion (F_obf) auf Basis einer Funktionalität (f) unter Anwendung von Obfuskation und einer Signatur (S) mit einem Schritt zum Bereitstellen (S_{C1}) wenigstens eines Funktionseingangsparameters (FI) und einer implementierten Funktion (F_obf) auf Basis einer Funktionalität (f) durch ein erstes System (Sys_1) an ein zweites System (Sys_2). Das Verfahren umfasst ferner ein Ausführen (S_{C2}) einer implementierten Funktion (F obf) auf Basis der Funktionalität (f) auf dem zweiten System (Sys_2). Das Ausführen der implementierten Funktion (F obf) umfasst ein Berechnen eines Ergebnisses (R) der Funktionalität (f) in Abhängigkeit des Funktionseingangsparameters (FI) in einem ersten Berechnungsabschnitt (F₁) der implementierten Funktion (F_obf). Zudem erfolgt das Berechnen einer Signatur (S) über das Ergebnis (R) und den Funktionseingangsparameter (FI) in Abhängigkeit eines in der implementierten Funktion (F_obf) integrierten Schlüssels, KI, in einem zweiten Berechnungsabschnitt (F_{2_obf}), der implementierten Funktion (F_obf). Ferner erfolgt das Bereitstellen eines Ergebnisses (R) des zur Berechnung des Ergebnisses (R) verwendeten Funktionseingangsparameters (FI) und der Signatur, S. Zudem umfasst das Verfahren ein Empfangen (S_{C3}) des Ergebnisses (R) des Funktionseingangsparameters (FI) und der Signatur (S) durch das erste System (Sys_1). Ferner umfasst das Verfahren ein Überprüfen (S_{C4}) der empfangenen Signatur (S) mit einem zu dem integrierten Schlüssel, KI, zugehörigen weiteren Überprüfungsschlüssel, KU, durch das erste System (Sys_1).

## Beschreibung

Die vorliegende Erfindung betrifft ein Verfahren und ein System zur nachweisbaren Datenverarbeitung wenigstens eines Funktionseingangsparameters mittels einer implementierten Funktion auf Basis einer Funktionalität unter Anwendung von Obfuskation und einer Signatur.

### Stand der Technik

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, EP 2891266 B1, das Dokument EP 2961091 A1, das Dokument EP 2961093 A1, das Dokument EP 3028140 B1, das Dokument EP 2930610 B1, das Dokument EP 2940620 B1, das Dokument EP 2899714 A1, das Dokument EP 2981926 A0, das Dokument EP 3125492 B1, das Dokument EP17195125, das Dokument EP17211075, das Dokument EP18178316, das Dokument EP18156084, das Dokument EP18151345, das Dokument EP18167702, das Dokument EP18153594, das Dokument EP18162050, das Dokument EP18178498, das Dokument EP18152117, das Dokument EP18150133, das Dokument EP18169145, das Dokument EP17210647, das Dokument EP18150146, das Dokument EP18167486, das Dokument EP18168670, das Dokument EP18162049, das Dokument EP17203819, das Dokument EP18157168, das Dokument EP18169421, das Dokument EP17210253, das Dokument EP17205224, das Dokument EP18169269, das Dokument EP18169254, das Dokument EP17210288, das Dokument EP18153025, das Dokument EP17200614, das Dokument EP18156308, das Dokument EP17201758, das Dokument EP18156511, das Dokument EP18159485, das Dokument EP17203573, das Dokument EP 17175275, das Dokument EP17186826, das Dokument WO 2018069271 A1, das Dokument PCT/EP2017/082508, das Dokument EP17179823, das Dokument WO 2017050348 A1, das Dokument WO 2018068965 A1 und das Dokument US 8 843 761 B2 bekannt.

Nachweisbare Datenverarbeitung hat das Ziel, zu einem gegebenen Funktionseingangsparameter ein Ergebnis einer Funktion auf einer vertrauenswürdigen Instanz zu berechnen. Die vertrauenswürdige Instanz sichert hierbei die korrekte Verwendung des Funktionseingangsparameters zur Berechnung des Ergebnisses durch die korrekte Ausführung der Funktion zu. Allerdings kann unter Umständen die vertrauenswürdige Instanz Ressourcen oder eventuell nicht bestimmte Parameter, die es bedarf, um die Berechnung bzw. die Ausführung der Funktion durchzuführen, nicht zur Verfügung stellen. Diesbezüglich erfolgt ein Auslagern der Berechnung an eine zweite Instanz bzw. an weitere Instanzen, beispielsweise an einen Server oder Serververbund in der Cloud, die die Ressourcen zur Verfügung stellen können, um eine Berechnung der Funktion durchzuführen. Unter Umständen kann die zweite Instanz zur Berechnung der Funktion als nicht vertrauenswürdig eingestuft sein. Durch eine nicht vertrauenswürdige Instanz kann hierbei nicht zugesichert werden, dass das erzielte Ergebnis während der Berechnung der Funktion mit dem Funktionseingangsparameter, nicht in böswilliger Absicht durch die nicht vertrauenswürdige Instanz manipuliert wurde. Da die zweite Instanz als nicht vertrauenswürdig eingestuft wurde, ergibt sich für die vertrauenswürdige Instanz das Problem, wenn das Ergebnis der Berechnung bereitgestellt wird, inwiefern diesem Ergebnis getraut werden kann, gerade wenn in besonderen Fällen bösartige Angriffe zu erwarten sind.

Eine Lösung des nicht Vertrauens können, kann durch das Verfahren "Verification by Replication" erzielt werden. Dieses Verfahren umfasst das Senden des Funktionseingangsparameters und der Funktion an mehrere Instanzen, anstatt nur an eine einzige Instanz. Zum Ausschluss vorsätzlicher Manipulation sollten diese Instanzen allerding zu voneinander unabhängigen Parteien gehören. Somit wird das Ergebnis der Funktion von mehreren Instanzen unabhängig voneinander berechnet. Im Anschluss an die Berechnung werden die Ergebnisse der einzelnen Instanzen miteinander verglichen. Stimmen alle Ergebnisse überein, wird das Ergebnis als korrekt berechnet interpretiert. Der Nachteil dieses Verfahrens besteht vor allem in der Notwendigkeit, Zugriff auf voneinander unabhängige Instanzen zu haben. Ferner benötigt die mehrfache Durchführung derselben Berechnung ein entsprechendes Vielfaches an Ressourcen, was zu erhöhten Kosten führt.

Weiterhin wird an Ansätzen zur Durchführung von nachweisbarer Datenverarbeitung auf Basis von "Fully Homomorphic Encryption" geforscht. Der Ansatz ermöglicht es, mit verschlüsselten Daten eine Berechnung durchzuführen, ohne selber Kenntnis über die Daten zu haben. Erste praktische Ansätze zeigen, dass die "Fully Homomorphic Encryption" sehr langsam in ihrer Ausführung ist und durch einen hohen Rechenaufwand viele Ressourcen bedarf, was zu erhöhten Kosten führt.

Es ist daher eine Aufgabe der vorliegenden Erfindung, ein Verfahren und ein System zur nachweisbaren Datenverarbeitung wenigstens eines Funktionseingangsparameters, FI, mittels einer implementierten Funktion, F_obf, auf Basis einer Funktionalität f unter Anwendung von Obfuskation und einer Signatur bereitzustellen.

Diese Aufgabe wird gemäß einem ersten Aspekt der vorliegenden Erfindung durch ein Verfahren mit den in Patentanspruch 1 angegebenen Merkmalen gelöst.

Die Erfindung schafft gemäß einem ersten Aspekt ein Verfahren zur nachweisbaren Datenverarbeitung wenigstens eines Funktionseingangsparameters, FI, mittels einer implementierten Funktion, F_obf, auf Basis einer Funktionalität, f, unter Anwendung von Obfuskation und einer Signatur, S, mit einem Schritt zum Bereitstellen durch ein erstes System, Sys_1, wenigstens eines Funktionseingangsparameters, FI, und einer implementierten Funktion, F_obf, auf Basis einer Funktionalität, f, an ein zweites System, Sys_2. Das Verfahren umfasst ferner ein Empfangen eines berechneten Ergebnisses, R, einer Funktionalität, f, in Abhängigkeit eines Funktionseingangsparameters, FI, des zur Berechnung des Ergebnisses, R, verwendeten Funktionseingangsparameters, FI, und einer Signatur, S, über das Ergebnis, R, und den Funktionseingangsparameter, FI, in Abhängigkeit eines in der implementierten Funktion, F_obf, integrierten Schlüssels, KI, durch das erste System, Sys_1, von dem zweiten System, Sys_2,. Ferner umfasst das Verfahren ein Überprüfen durch das erste System, Sys_1, der mit dem Ergebnis, R, und dem zur Berechnung des Ergebnisses, R, verwendeten Funktionseingangsparameters, FI, empfangenen Signatur, S, mit einem zu dem integrierten Schlüssel, KI, zugehörigen weiteren Überprüfungsschlüssel, KU.

Die Erfindung schafft ferner gemäß einem weiteren Aspekt ein Verfahren mit den in Patentanspruch 2 angegebenen Merkmalen.

Die Erfindung schafft gemäß einem zweiten Aspekt ein Verfahren zur nachweisbaren Datenverarbeitung wenigstens eines Funktionseingangsparameters, FI, mittels einer implementierten Funktion, F_obf, auf Basis einer Funktionalität, f, unter Anwendung von Obfuskation und einer Signatur, S, mit einem Schritt zum Empfangen durch ein zweites System, Sys_2, wenigstens eines Funktionseingangsparameters, FI, und einer implementierten Funktion, F_obf, auf Basis einer Funktionalität, f, von einem ersten System, Sys_1. Ferner umfasst das Verfahren ein Ausführen der implementierten Funktion, F_obf, auf Basis der Funktionalität, f, durch das zweite System, Sys_2. Das Ausführen der implementierten Funktion, F_obf, umfasst das Berechnen eines Ergebnisses, R, der Funktionalität, f, in Abhängigkeit des Funktionseingangsparameters, FI, in einem ersten Berechnungsabschnitt, F_1, der implementierten Funktion, F_obf. Ferner wird eine Signatur, S, über das Ergebnis, R, und den Funktionseingangsparameter, FI, in Abhängigkeit eines in der implementierten Funktion, F_obf, integrierten Schlüssels, KI, in einem zweiten Berechnungsabschnitt, F_2, der implementierten Funktion, F_obf, berechnet. Weiterhin umfasst das Ausführen der implementierten Funktion, F_obf, ein Bereitstellen des Ergebnisses, R, des zur Berechnung des Ergebnisses, R, verwendeten Funktionseingangsparameters, FI, und der Signatur, S. Ferner umfasst das Verfahren ein Senden des Ergebnisses, R, des zur Berechnung des Ergebnisses, R, verwendeten Funktionseingangsparameter, FI, und der Signatur, S, an das erste System, Sys_1.

Die Erfindung schafft ferner gemäß einem weiteren Aspekt ein Verfahren mit den in Patentanspruch 3 angegebenen Merkmalen.

Die Erfindung schafft gemäß einem dritten Aspekt ein Verfahren zur nachweisbaren Datenverarbeitung wenigstens eines Funktionseingangsparameters, FI, mittels einer implementierten Funktion, F_obf, auf Basis einer Funktionalität, f, unter Anwendung von Obfuskation und einer Signatur, S, mit einem Schritt zum Bereitstellen wenigstens eines Funktionseingangsparameters, FI, und einer implementierten Funktion, F_obf, auf Basis einer Funktionalität, f, durch ein erstes System, Sys_1, an ein zweites System, Sys_2. Das Verfahren umfasst ferner ein Ausführen einer implementierten Funktion, F_obf, auf Basis der Funktionalität, f, auf dem zweiten System, Sys_2. Das Ausführen der implementierten Funktion, F_obf, umfasst ein Berechnen eines Ergebnisses, R, der Funktionalität, f, in Abhängigkeit des Funktionseingangsparameters, FI, in einem ersten Berechnungsabschnitt, F_1, der implementierten Funktion, F_obf. Zudem wird eine Signatur, S, über das Ergebnis, R, und den Funktionseingangsparameter, FI, in Abhängigkeit eines in der implementierten Funktion, F_obf, integrierten Schlüssels, KI, in einem zweiten Berechnungsabschnitt, F_2, der implementierten Funktion, F_obf, berechnet. Weiterhin wird das Ergebnis, R, der zur Berechnung des Ergebnisses, R, verwendete Funktionseingangsparameter, FI, und die Signatur, S, bereitgestellt. Ferner umfasst das Verfahren ein Empfangen des berechneten Ergebnisses, R, einer Funktionalität, f, in Abhängigkeit eines Funktionseingangsparameters, FI, des zur Berechnung des Ergebnisses, R, verwendeten Funktionseingangsparameters, FI, und der Signatur, S, über das Ergebnis, R, und den Funktionseingangsparameter, FI, in Abhängigkeit des in der implementierten Funktion, F_obf, integrierten Schlüssels, KI, durch das erste System, Sys_1. Zudem umfasst das Verfahren ein Überprüfen der mit dem Ergebnis, R, und des zur Berechnung des Ergebnisses, R, verwendeten Funktionseingangsparameters, FI, empfangenen Signatur, S, mit einem zu dem integrierten Schlüssel, KI, zugehörigen weiteren Überprüfungsschlüssel, KU, durch das erste System, Sys_1.

Die Erfindung schafft ferner gemäß einem weiteren Aspekt ein System mit den in Patentanspruch 14 angegebenen Merkmalen. Die Erfindung schafft demnach ein System mit einer Schnittstelle, welche ausgebildet ist, wenigstens einen Funktionseingangsparameters, FI, und eine implementierte Funktion, F_obf, auf Basis einer Funktionalität, f, für ein zweites System, Sys_2, bereitzustellen und ein Ergebnis, R, einer Funktionalität, f, in Abhängigkeit eines Funktionseingangsparameters, FI, den zur Berechnung des Ergebnisses, R, verwendeten Funktionseingangsparameter, FI, und eine Signatur, S, über das Ergebnis, R, und den Funktionseingangsparameter, FI, in Abhängigkeit eines in der implementierten Funktion, F_obf, integrierten Schlüssels, KI, von dem zweiten System, Sys_2, zu empfangen. Ferner umfasst das System eine Prozessoreinheit, welche ausgebildet ist, die mit dem Ergebnis, R, und dem zur Berechnung des Ergebnisses, R, verwendeten Funktionseingangsparameters, FI, empfangene Signatur, S, mit einem zu dem integrierten Schlüssel, KI, zugehörigen weiteren Überprüfungsschlüssel, KU, zu überprüfen.

Die Erfindung schafft insbesondere ein System mit einem Prozessor zur Durchführung eines Verfahrens zur nachweisbaren Datenverarbeitung wenigstens eines Funktionseingangsparameters, FI, mittels einer implementierten Funktion, F_obf, auf Basis einer Funktionalität, f, unter Anwendung von Obfuskation und einer Signatur, S, mit den in Patentanspruch 1 angegebenen Merkmalen.

Die Erfindung schafft ferner gemäß einem weiteren Aspekt ein System mit den in Patentanspruch 15 angegebenen Merkmalen.

Die Erfindung schafft demnach ein System mit einer Schnittstelle, welche ausgebildet ist, einen Funktionsparameter, FI, und eine implementierte Funktion, F_obf, auf Basis einer Funktionalität, f, von einem ersten System, Sys_1, zu empfangen und ein Ergebnis, R, den zur Berechnung des Ergebnisses, R, verwendeten Funktionseingangsparameter, FI, und eine Signatur, S, über das Ergebnis, R, und den Funktionseingangsparameter, FI, an das erste System, Sys_1, zu senden. Ferner umfasst das System eine Prozessoreinheit, welche ausgebildet ist, ein Ergebnis, R, der Funktionalität, f, in Abhängigkeit des Funktionseingangsparameters, FI, in einem ersten Berechnungsabschnitt, F_1, der implementierten Funktion, F_obf, und eine Signatur, S, über das Ergebnis, R, und des Funktionseingangsparameters, FI, in Abhängigkeit eines in der implementierten Funktion, F_obf, integrierten Schlüssels, KI, in einem zweiten Berechnungsabschnitt, F_2, der implementierten Funktion, F_obf, zu berechnen.

Die Erfindung schafft insbesondere ein System mit einem Prozessor zur Durchführung eines Verfahrens zur nachweisbaren Datenverarbeitung wenigstens eines Funktionseingangsparameters, FI, mittels einer implementierten Funktion, F_obf, auf Basis einer Funktionalität, f, unter Anwendung von Obfuskation und einer Signatur, S, mit den in Patentanspruch 2 angegebenen Merkmalen.

Obfuskation beschreibt die absichtliche Veränderung von Programmcode, so dass der Quellcode eines Programms für einen Menschen schwer verständlich oder schwer rückgewinnbar wird. Im Stand der Technik sind verschiedenste Obfuskation-Methoden bekannt, um Programmcode für Menschen schwer verständlich zu machen und so ein Reverse Engineering oder eine für einen Angreifer nützliche Veränderung des Programmcodes zu verhindern. Ziel der Obfuskation ist es, den Programmcode soweit zu transformieren, dass dieser einem menschlichen Verständnis möglichst unzugänglich ist, aber funktional die gleichen Berechnungen durchführt und das Ergebnis trotz Obfuskation das gleiche bleibt. Zur Durchführung von Obfuskation stehen verschiedenste Obfuskation-Tools zur Verfügung, die weitestgehend automatisch obfuszierende Transformationen auf ein Programm anwenden. Dies geschieht in der Regel entweder auf Basis des Programmcodes oder ausgehend vom fertig kompilierten und gelinkten Maschinencode eines Programms.

Unter einem ersten System, Sys_1, ist eine vertrauenswürdige Instanz, beispielsweise ein Computer, ein Server oder ein Serverbund, oder eine virtuelle Instanz oder ein Mikrocontroller zur Ausführung einer übergebenen Funktionalität, f, zu verstehen. Diese vertrauenswürdige Instanz sichert hierbei die korrekte Verwendung des übergebenen Funktionseingangsparameters, FI, zur Berechnung des Ergebnisses, R, durch die korrekte Implementierung der Funktion, F, auf Basis der übergebenen Funktionalität, f, zu. Diese Zusicherung wird beispielsweise durch eine In-house Instanz erzielt, auf die keine Dritte Zugriff haben und/oder eine Manipulation bzw. Angriff von außerhalb der Instanz erfolgen kann.

Unter einem zweiten System, Sys_2, ist eine nicht vertrauenswürdige Instanz, beispielsweise ein Computer, ein Server oder ein Serverbund, oder eine virtuelle Instanz oder ein Mikrocontroller zur Ausführung einer implementierten Funktion, F_obf, auf Basis einer Funktionalität, f, zu verstehen. Diese Instanz bzw. Instanzen stellen dabei externe, von einem Dritten zur Verfügung gestellte Instanzen dar, die als nicht vertrauenswürdig eingestuft sind, da Dritte Zugriff auf die Implementierung der Funktion, F, haben. Es stellt sich dabei das Problem, inwieweit einem durch die nicht vertrauenswürdig eingestufte Instanz bereitgestellten Ergebnis, R, getraut werden kann. Durch Eingriffe Dritter in die Implementierung der Funktion, F, bzw. in die Berechnung des Ergebnisses, R, können gefälschte bzw. verfälschte Ergebnisse bereitgestellt werden, die abhängig von der Anwendung demjenigen Schaden zufügen, der mit dem Ergebnis, R, weiter rechnet.

Unter einer Funktionalität, f, kann jedes beliebige Programm verstanden werden, das keine zusätzliche Interaktion bzw. eine Eingabe eines Dritten zum Ausführen des Programms erfordert. Insbesondere stellt die Funktionalität, f, im Sinne der Erfindung eine mathematische Beschreibung, Berechnung und/oder einen Algorithmus dar. Diese mathematische Beschreibung, Berechnung und/oder Algorithmus kann aufgrund von Komplexität und/oder nicht vorhandener eigener Ressourcen in einem System zur Berechnung auf ein anderes System ausgelagert werden. Die Berechnung erfolgt vorzugsweise in einem Berechnungsvorgang von einem Input beginnend bis zur Ausgabe des berechneten Ergebnisses, R. Dieser Berechnungsvorgang kann dabei eine entsprechende Rechenzeit und Rechenkapazität bzw. Ressourcen des Systems in Anspruch nehmen.

Unter einer Funktion, F, ist die Implementierung der Funktionalität, f, auf einem System zur Ausführung der Funktionalität, f, zu verstehen. Die Funktion, F, stellt dabei die Implementierung dar, die in Abhängigkeit des ausführenden Systems unterschiedlich ausgestaltet ist. Beispielsweise kann die Funktion, F, in Abhängigkeit des ausführenden Systems in einer jeweils sich unterscheidenden Programmiersprache implementiert sein. Ferner kann die Funktion, F, verschiedene Arten der Implementierung der mathematischen Beschreibung der Funktionalität, f, in Abhängigkeit des ausführenden Systems umfassen. Beispielsweise kann die Funktionalität f = x³ auf einem ausführenden System als f = x*x*x oder als eine rekursive Funktion, die sich selbst aufruft und das Ergebnis jeweils mit x multipliziert, implementiert sein.

Unter der implementierten Funktion, F_obf, ist die Implementierung der Funktion, F, zu verstehen, bei der Teile der Funktionalität, f, bzw. die Funktionalität, f, komplett obfusziert in einem obfuszierten Funktionsblock, F_obf, vorliegen. Ferner umfasst die implementierte Funktion, F_obf, einen integrierten Schlüssel, KI, welcher klar und/oder obfusziert in die implementierte Funktion, F_obf, eingebunden ist.

Bei einer nachweisbaren Datenverarbeitung liegt das Vertrauen des ersten Systems, Sys_1, beispielsweise des vertrauenswürdigen Systems, in die Korrektheit des Ergebnisses, R, nicht auf dem Nachrechnen des Ergebnisses, R, sondern auf der Überprüfung der Signatur, S, und dem Wissen, dass nur die obfuszierte Implementierung (obfuszierter Funktionsblock, F_obf) eine korrekte Signatur, S, über den Funktionseingangsparameter, FI, und das daraus errechnete Ergebnis, R, berechnen kann und der obfuszierte Funktionsblock, F_obf, nur schwer im Sinne eines Angreifers manipulierbar ist. Somit soll der Berechnung bzw. dem bereitgestellten Ergebnis ohne weitere Überprüfung getraut werden können.

Der vorliegenden Erfindung liegt die Kenntnis zugrunde, dass anders als bei der Methode "Verification by Replication" nicht mehrere, zu unabhängigen Parteien gehörende Systeme, insbesondere nicht vertrauenswürdige Systeme benötigt werden, um ein bereitgestelltes Ergebnis, R, als korrekt zu verifizieren. Durch das erfinderische Verfahren und System kann dem nicht vertrauenswürdigen System, das die Berechnung der Funktionalität, f, ausgeführt hat, vertraut werden, da das Ergebnis, R, mit einer obfuszierten Implementierung (obfuszierter Funktionsblock, F_obf) berechnet wurde und diese eine Manipulation durch Dritte unterbindet.

Zudem kann verglichen mit dem im Stand der Technik bekannten auf "Fully Homomorphic Encryption" basierenden Ansätzen die Erfindung für deutlich komplexere und praktisch relevantere Einsatzszenarien angewendet werden.

Überdies ermöglicht die Erfindung die Verifikation eines Ergebnisses R = f(FI, FU) durch ein erstes System, Sys_1, beispielsweise eines vertrauenswürdigen Systems, bei denen das erste System, Sys_1, selbst den Input nur teilweise (in Form des Funktionseingangsparameters, FI) kennt und die Überprüfbarkeit der Frage, ob die Funktionalität, f, überhaupt mit dem Funktionseingangsparameter, FI, (sowie einem dem ersten System, Sys_1, unbekannten Funktionseingangsparameter, FU) auf Seite eines zweiten Systems, Sys_2, beispielsweise einem nicht vertrauenswürdigen Systems, berechnet wurde.

Mittels der vorliegenden Erfindung ist zudem sichergestellt, dass es unwahrscheinlich ist, dass ein Dritter erkennt, welche Berechnung durchgeführt wird und wie diese Berechnung implementiert bzw. umgesetzt ist. Zudem kann innerhalb der Berechnung keine gezielte Manipulation erfolgen und/oder Teile herausgelöst werden, die beispielsweise für eine Manipulation benötigt werden. Aufgrund dessen, dass bei der vorliegenden Erfindung ein Zusammenhang innerhalb der Implementierung nicht erkennbar ist, können keine Teile der implementierten Funktion, F_obf, herausgelöst werden, um beispielsweise die Berechnung der Signatur, S, für eine spätere Manipulation des Ergebnisses, R, zu verwenden.

Weiteren Merkmale und Vorteile der Erfindung sind in den Ausführungsformen beschrieben.

Bei einer möglichen Ausführungsform des erfindungsgemäßen Verfahrens kann das empfange Ergebnis, R, nach dem Verifizieren der Signatur, S, für weitere Prozesse verwendet werden.

Bei einer möglichen Ausführungsform des erfindungsgemäßen Verfahrens werden Teile der Funktionalität, f, in der implementierten Funktion, F_obf, obfusziert.

Dies hat den Vorteil, dass ein Kompromiss zwischen der Sicherheit und dem durch die Obfuskation von der Funktionalität, f, entstehenden Overhead hinsichtlich Laufzeit und Programmcodegröße getroffen werden kann.

Hierfür wird aus einem Funktionseingangsparameter, FI, und einem Teil der nicht obfuszierten Daten ein Zwischenergebnis, Z, berechnet. Das Zwischenergebnis, Z, geht in das Ergebnis des ersten Berechnungsabschnitts, F_1, ein. Das Ergebnis aus dem ersten Berechnungsabschnitts, F_1, würde dann in den zweiten Berechnungsabschnitt, F_2, zur Berechnung der Signatur, S, eingehen.

Eine Obfuskation nur bestimmter Teile innerhalb der Funktion, F, hat zudem den Vorteil, dass, wenn F eine sehr komplexe Funktion ist, die durch die Obfuskation bedingte Erhöhung der Laufzeit und des Speicherbedarfs verringert werden kann. Andernfalls würde eventuell der Vorteil eines Auslagerns verloren gehen. Diesbezüglich ist ein Kompromiss zwischen der Menge an Obfuskation (Sicherheit) und notwendiger Ressourcen zur Berechnung zu finden. Dies kann in vorteilhafter Weise erreicht werden, in dem nur ein Teil obfusziert wird, beispielsweise die letzten 10% der Rechenschritte. Der obfuszierte Teil der Berechnung wird dann mit einem obfuszierten Berechnen der Signatur, S, verbunden. Somit erhält man einen Nachweis, dass die Originalimplementierung verwendet wurde und der Verlust an Performance ist geringer.

Bei einer weiteren möglichen Ausführungsform des erfindungsgemäßen Verfahrens wird die Funktionalität, f, in der implementierten Funktion, F_obf, obfusziert.

Das Verschmelzen der Funktionalität, f, mit der Signatur in einer gemeinsamen obfuszierten Implementierung erzeugt einen aus Sicht des Angreifers untrennbaren Funktionsblock, F_obf, der es lediglich ermöglicht, zu einem Funktionseingangsparameter, FI, ein korrektes Ausgangspaar umfassend das Ergebnis, R, den Funktionseingangsparameter, FI, und die Signatur, S, mit R = f(FI) und S = S(f(FI),FI) zu berechnen. In vorteilhafterweise wird somit der Angriff "Codelifting" unterbunden. Für die Berechnung der Funktionalität, f, wird der Eingangsparameter, FI, verwendet. Ferner umfasst das Ausgangspaar den zur Berechnung des Ergebnisses, R, verwendeten Funktionseingangsparameter, FI.

Bei einer weiteren möglichen Ausführungsform des erfindungsgemäßen Verfahrens wird der in der implementierten Funktion, F_obf, integrierte Schlüssel, KI, obfusziert.

In vorteilhafter Weise wird die Signatur, S, mit dem integrierten Schlüssel, KI, in dem zweiten Berechnungsabschnitt, F_2, durch den obfuszierten Programmcode (F_{2_obf}) durchgeführt. Somit ist sichergestellt, dass der integrierte Schlüssel, KI, selbst nicht ohne Weiteres im Klartext durch einen Angreifer, A, aus F_{2_obf} extrahiert werden kann.

Bei einer weiteren möglichen Ausführungsform des erfindungsgemäßen Verfahrens ist der integrierte Schlüssel, KI, ein privater Schlüssel, K_priv, und der Überprüfungsschlüssel, KU, ein öffentlicher Schlüssel, K_pub.

Die Verwendung eines privaten Schlüssels, K_priv, und eines öffentlichen Schlüssels, K_pub, hat den Vorteil, dass nur derjenige den privaten Schlüssel, K_priv, kennt, der eine Signierung durchführt. Die Außenwelt bzw. Dritte haben einen abgespeckten, einen sogenannten öffentlichen Schlüssel, K_pub, mit dem die Signatur, S, überprüft werden kann. Mit dem öffentlichen Schlüssel, K_pub, kann keine Signatur erstellt werden. Dies entspricht einer asymmetrischen Signatur, S.

Der private Schlüssel, K_priv, liegt in der implementierten Funktion, F_obf, in einer nicht lesbaren Schreibweise vor. Dies wird durch die Obfuskation gewährleistet. Der private Schlüssel, K_priv, ist implizit in der Signatur in dem vom zweiten System, Sys_2, bereitgestellten Ausgabe, R, S, enthalten. Das erste System, Sys_1, kann anhand des Ergebnisses, R, und der Signatur, S, die es empfangen hat, mit dem öffentlichen Schlüssel, K_pub, die Signatur, S, verifizieren und prüfen, ob diese mit dem in der implementierten Funktion, F_obf, befindlichen privaten Schlüssel, K_priv, erstellt wurde.

Mit der Signatur, S, wird bestätigt, dass zu dem Funktionseingangsparameter, FI, ein Ergebnis, R, bei der Berechnung der Funktionalität, f, bereitgestellt wird. Die Signatur, S, bestätigt somit, dass die Berechnung der obfuszierten Funktion, F_obf, durchgeführt wurde, da nur diese Implementierung den privaten Schlüssel, K_priv, kennen und von keinem Dritten extrahiert werden kann, um eine gefälschte Signatur, S', zu erstellen.

Bei einer weiteren möglichen Ausführungsform des erfindungsgemäßen Verfahrens sind der integrierte Schlüssel, KI, und der Überprüfungsschlüssel, KU, ein Schlüssel zur Berechnung eines Nachrichtenauthentifizierungscodes, MAC.

Bei einer weiteren möglichen Ausführungsform des erfindungsgemäßen Verfahrens wird der Nachrichtenauthentifizierungscode, MAC, auf Basis eines geheimen Schlüssels, K_symm, berechnet.

In vorteilhafter Weise kann statt eines privaten Schlüssels, K_priv, und eines öffentlichen Schlüssels, K_pub, zur Erzeugung einer asymmetrischen Signatur, S, (S(R, FI) innerhalb der implementierten Funktion, F_obf, auch ein symmetrischer Nachrichtenauthentifizierungscode, MAC (Message Authentication Code), M(R, FI), auf Basis eines geheimen Schlüssels, K_symm, berechnet werden. Durch die Verwendung eines symmetrischen Nachrichtenauthentifizierungscodes, MAC, wird die Performance der Signatur, S, verbessert. Die Performanceverbesserung ergibt sich, wenn der geheime Schlüssel in der obfuszierten Implementierung, F_obf, eingebettet ist und die Signatur, S, durch die obfuszierte Implementierung, F_obf, berechnet wird. Diese Berechnung erfolgt schneller und bedarf weniger Ressourcen als beispielsweise die Verwendung eines asymmetrischen Schlüssels (K_priv, K_pub).

Die Verwendung eines symmetrischen Nachrichtenauthentifizierungscodes, MAC, ist dann möglich, wenn die Verifikation des symmetrischen Nachrichtenauthentifizierungscodes, MAC, durch das vertrauenswürde System (erste System, Sys_1) in einer nur dem vertrauenswürdigen System zugänglichen Umgebung erfolgt, so dass insbesondere die Implementierung der Verifikation (inkl. K_symm) nur dem vertrauenswürdigen System bekannt bleibt.

Alternativ muss die Verifikation des symmetrischen Nachrichtenauthentifizierungscodes, MAC, durch das vertrauenswürdige System (wie die MAC-Berechnung selbst) obfusziert erfolgen, d.h. dass der geheime Schlüssel, K_symm, nicht aus der Implementierung der Verifikation ablesbar ist und ferner ausgeschlossen ist, dass aus ihr durch den Angriff "Codelifting" der Code der Berechnung eines gültigen MACs M(R', FI) zu einem gefälschten Ergebnis, R', extrahiert werden kann. Die MAC-Berechnung erfolgt nach bekannten Standard-Verfahren.

Bei einer weiteren möglichen Ausführungsform des erfindungsgemäßen Verfahrens erfolgt die Berechnung des Ergebnisses, R, der implementierten Funktion, F_obf, auf Basis der Funktionalität, f, in Abhängigkeit eines weiteren Funktionseingangsparameter, FU, wobei der weitere Funktionseingangsparameter, FU, durch das zweite System, Sys_2, bereitgestellt wird.

In vorteilhafter Weise kann ein erstes System, Sys_1, beispielsweise ein vertrauenswürdiges System, die korrekte Berechnung des Ergebnisses, R, auch dann verifizieren, wenn in die Berechnung f = f(FI, FU) weitere, nur für ein zweites System, Sys_2, beispielsweise ein nicht vertrauenswürdiges System, bekannte Funktionseingangsparameter, FU, eingehen. Insbesondere kann für diesen Fall dem ersten System, Sys_1, gegenüber glaubhaft belegt werden, dass der Programmcode zur Berechnung der Funktionalität, f, auf Seite des zweiten Systems, Sys_2, überhaupt ausgeführt wurde.

Zudem kann durch die vorliegende Erfindung in vorteilhafter Weise das Ergebnis, R, nachgeprüft werden, wenn beispielsweise der weitere Funktionseingangsparameter, FU, dem ersten System, Sys_1, nicht zur Verfügung steht. Ferner ist eine Prüfung des Ergebnisses, R, auch dann möglich, wenn es an der Kenntnis über die Korrektheit des Funktionseingangsparameters, FU, mangelt und wenn keine Kenntnis vorliegt, ob der Funktionseingangsparameter, FU, überhaupt in die Berechnung des Ergebnisses, R, eingeflossen ist.

Der Fall des Vorhandenseins weiterer Funktionseingangsparameter, FU, kann eintreten, wenn einer externen Partei eventuell Daten vorliegen, die das System, welches die implementierte Funktion, F_obf, auf Basis der Funktionalität, f, bereitstellt, nicht hat. Beispielsweise kann dies ein untergeordneter Bereich eines Unternehmens sein, oder ein anderer Standort eines Unternehmens, die Daten gesammelt haben und die in die Berechnung einfließen müssen. Aufgrund von Datenschutz (sensible Daten) und/oder einem zu hohem Aufwand für den Transfer der Daten, wird die Berechnung des Ergebnisses, R, zu dem System, beispielsweise zu dem zweiten System, Sys_2 ausgelagert. Ein Nachrechen, das zunächst durch die fehlenden Daten nicht möglich wäre, ist nicht notwendig, da die Korrektheit der Berechnung durch die Signatur im obfuszierten Funktionsblock, F_obf, gewährleistet ist.

Bei einer weiteren möglichen Ausführungsform des erfindungsgemäßen Verfahren fließen die weiteren Funktionseingangsparameter, FU, die in die Berechnung des Ergebnisses, R, durch das zweite System, Sys_2, einfließen und die dem ersten System, Sys_1, unbekannt sind, mit in die Berechnung der Signatur, S, ein. Somit erfolgt eine Berechnung der Signatur, S, auch über die weiteren Funktionseingangsparameter, FU. In vorteilhafter Weise kann somit eine korrekte Verwendung der Funktionseingangsparameter, FU, bzw. das Ergebnis, R, der Berechnung überprüft werden. Für eine Kontrolle der Signatur, muss der Funktionsparameter, FU, oder die Funktionsparameter, FU, von dem zweiten System, Sys_2 an das erste System, Sys_1, übermittelt werden.

Bei einer weiteren möglichen Ausführungsform des erfindungsgemäßen Verfahrens kann ein Hashwert, HFU, über den weiteren Funktionseingangsparameter, FU, in die Berechnung der Signatur, S, einfließen. Somit kann für zwei oder mehrere Berechnungen einer implementierten Funktion, F_obf, auf Basis der Funktionalität, f, mit dem gleichen Funktionseingangsparameter, FU, aber möglicherweise unterschiedlichem Funktionseingangsparameter, FI, sichergestellt werden, dass immer der gleiche Funktionseingangsparameter, FU, verwendet wurde. Für eine Kontrolle der Signatur, muss der Hashwert, HFU, von dem zweiten System, Sys_2 an das erste System, Sys_1, übermittelt werden.

Bei dem ersten Empfang eines Ergebnisses, R, muss dem bereitstellenden zweiten System, Sys_2, vertraut werden. Bei jeder weiteren Berechnung kann anschließend durch das erste System, Sys_1, evaluiert werden, dass dieselben Funktionseingangsparameter, FU, wie bei der ersten Berechnung eingegangen sind, sofern der vom zweiten System Sys_2 übermittelte Hashwert, HFU, sich nicht geändert hat und die Signatur, S, über das Ergebnis, R, den Funktionseingangsparameter, FI, und den Hashwert, HFU, als korrekt verifiziert werden kann.

Das Verwenden eines Hashwerts statt der Funktionseingangsparameter, FU, hat den Vorteil, dass, wenn der weitere Funktionseingangsparameter, FU, auf einem Betriebsgeheimnis beruht und der Inhaber des Weiteren Funktionseingangsparameter, FU, diesen nicht frei zur Verfügung stellen will, weil beispielsweise firmeninternes Know-how und/oder sensible Daten damit verbunden sind, dennoch eine korrekte Berechnung mit dem korrekten Funktionseingangsparameter, FU, verifiziert werden kann.

Bei einer weiteren möglichen Ausführungsform des erfindungsgemäßen Verfahrens wird das Ergebnis, R, der Funktionalität, f, in Abhängigkeit des Funktionseingangsparameters, FI, wenigstens ein weiteres Mal, als ein weiteres Ergebnis, R_2, berechnet.

Bei einer weiteren möglichen Ausführungsform des erfindungsgemäßen Verfahrens wird die Signatur, S, über das weitere Ergebnis, R_2, und den Funktionseingangsparameter, FI, in Abhängigkeit eines in der implementierten Funktion, F_obf, integrierten Schlüssels, KI, in einem zweiten Berechnungsabschnitt, F_2, der implementierten Funktion, F_obf, berechnet.

Im Rahmen der implementierten Funktion, F_obf, wird das Ergebnis, R, R = R_2 = f(FI) zweimal unabhängig voneinander berechnet. Das Ergebnis, R, wird im Programmcode als Ergebnis zurückgegeben. Das weitere Ergebnis, R_2, dienst als Input für die Berechnung der Signatur, S, (S (R_2, FI)). Damit ist in vorteilhafter Weise die Abhängigkeit zwischen dem sichtbaren Ergebnis, R, und der Signatur, S, (S(R_2, FI) im Programmcode der implementierten Funktion, F_obf, wesentlich schwieriger nachvollziehbar, da die Berechnungsstränge für das Ergebnis, R, und des weiteren Ergebnisses, R_2, ausgehend vom Funktionseingangsparameter, FI, auseinanderlaufen und R=R_2 bei entsprechender Obfuskation aus Sicht des Angreifers, A, nicht offensichtlich ist. Weiterhin vorteilhaft ist, dass ein Angreifer, A, den Punkt, an dem die Signaturberechnung auf Basis des Ergebnisses, R, beginnt, noch schwerer im obfuszierten Programmcode lokalisieren kann. Der Programmcode wird somit schwerer analysierbar, da bestimmte Linearitäten, beispielsweise erst ein Berechnen des Ergebnisses, R, und dann der Signatur, S, nicht mehr auftreten.

In einer weiteren möglichen Ausführungsform des erfindungsgemäßen Verfahrens kann in dem Programmcode der Signatur, S, zusätzlich ein Mechanismus eingebettet werden, so dass die Evaluierung der Signatur, S, nur dann erfolgreich verläuft, wenn das Ergebnis, R, und das weitere Ergebnis, R_2, übereinstimmen. Dies erschwert einen Angriff mit "Codelifting" zusätzlich, weil ein Angreifer, A, die implementierte Funktion, F_obf, dann an mindestens zwei Stellen gezielt manipulieren muss, um die Signatur, S, für ein gefälschtes Ergebnis, R', zu berechnen.

Der Mechanismus umfasst dabei ein paralleles Berechnen und einen Vergleich der Ergebnisse, R, R_2, im Rahmen des obfuszierten Funktionsblocks, F_obf. Das parallele Berechnen kann über zwei unabhängige Pfade erfolgen, die in einem ersten Schritt das R berechnen. Innerhalb der Berechnung treffen die Pfade aufeinander und die beiden Ergebnisse, R, R_2, werden miteinander verglichen. Dieser Vergleich erfolgt innerhalb des obfuszierten Programmcodes und wird nur weiter fortgesetzt, wenn beide Ergebnisse, R, R_2, übereinstimmen.

Bei einer weiteren möglichen Ausführungsform des erfindungsgemäßen Verfahrens wird statt des Ergebnisses, R, in einem ersten Berechnungsschritt, BS_1, nur ein Zwischenergebnis, Z, berechnet, aus dem das Ergebnis, R, in wenigen Rechenschritten abgeleitet werden kann. In einem zweiten Berechnungsschritt, BS_2, fließt das Ergebnis, R, abgeleitet aus dem Zwischenergebnis, Z, dann implizit ein, ohne explizit ausgerechnet zu werden.

Vor der (obfuszierten) Berechnung der Signatur, S, (S (R, FI)) wird das Ergebnis, R, nicht explizit (implizit) ausgerechnet, sondern nur ein Zwischenergebnis, Z, aus dem das Ergebnis, R, leicht abgeleitet werden kann, bestimmt. Die Anfangsschritte der Signaturberechnung werden dann in einem Schritt mit der Berechnung des Ergebnisses, R, aus dem Zwischenergebnis, Z, zusammengezogen, so dass das Ergebnis, R, auch auf der logischen (nicht obfuszierten) Ebene nie explizit ausgerechnet wird. Hierdurch wird in vorteilhafter Weise einem Angreifer, A, die Lokalisierung des Übergangs zwischen der Berechnung des Ergebnisses, R, und der Berechnung der Signatur, S, erschwert. Dies ist insbesondere der Fall, wenn dafür statistische Angriffe, beispielsweise eine Analyse, wie sich welche obfuszierten Werte in Abhängigkeit vom Funktionseingangsparameter, FI, oder Ergebnis, R, verändern, zum Einsatz kommen.

Durch den Einbau verschiedener Variationen, indem beispielsweise nicht offensichtlich die Ergebnisse errechnet werden, sondern in leicht modifizierter Variante, können Angriffe erschwert werden.

Im Weiteren werden mögliche Ausführungsformen des erfindungsgemäßen Verfahrens und des erfindungsgemäßen Systems unter Bezugnahme auf die beigefügten Figuren näher erläutert.

Es zeigen:
- Fig. 1: Graphen zur Erläuterung eines Angriffs mittels Codelifting;
- Fig. 2: Graphen zur Erläuterung des erfindungsgemäßen Verfahrens;
- Fig. 3: ein Ablaufdiagramm zur Darstellung einer möglichen Ausführungsform des erfindungsgemäßen Verfahrens zur nachweisbaren Datenverarbeitung;
- Fig. 4: ein Ablaufdiagramm zur Darstellung einer möglichen Ausführungsform des erfindungsgemäßen Verfahrens zur nachweisbaren Datenverarbeitung;
- Fig. 5: ein Ablaufdiagramm zur Darstellung einer möglichen Ausführungsform des erfindungsgemäßen Verfahrens zur nachweisbaren Datenverarbeitung;
- Fig. 6: eine Darstellung einer möglichen Ausführungsform des erfindungsgemäßen Systems zur nachweisbaren Datenverarbeitung;
- Fig. 7: eine Darstellung einer möglichen Ausführungsform des erfindungsgemäßen Systems zur nachweisbaren Datenverarbeitung.

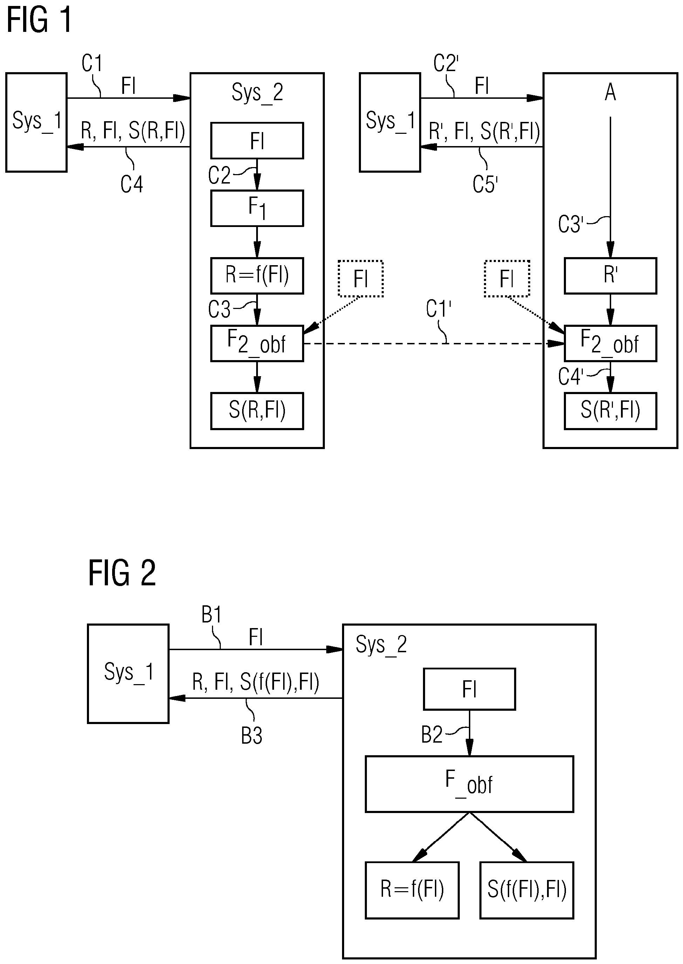

Fig. 1 veranschaulicht den Missbrauch der obfuszierten Implementierung F_{2_obf} mittels des Angriffs "Codelifting" durch einen Angreifer, A.

Die Funktion F ist die Implementierung der Funktionalität f die auf der Seite eines zweiten Systems Sys_2 ausgeführt wird. Die Überprüfbarkeit eines von dem zweiten System, Sys_2 bereitgestellten Ergebnisses R (R = f(FI)) wird dadurch gewährleistet, dass in der Funktion, F, zusätzlich die Erstellung einer asymmetrischen Signatur S (S(R, FI) über das Ergebnis R und den Funktionseingangsparameter FI auf Basis eines in der Funktion, F, verankerten privaten Schlüssels eingebracht wird. Die Funktion, F, setzt sich somit zunächst aus den zwei unabhängigen Teilen F₁ (Berechnung des Ergebnisses R=f(FI)) und F₂ (Berechnung der Signatur S (R, FI), nicht dargestellt) zusammen.

Ein erstes System Sys_1 (vertrauenswürdiges System) prüft mit dem zum privaten Schlüssel, K_priv, gehörenden öffentlichen Schlüssel, K_pub, die Gültigkeit der Signatur S und sieht diese als Beweis dafür an, dass das Ergebnis R tatsächlich durch die unverfälschte Implementierung der Funktion F berechnet wurde. Jedenfalls muss das Ergebnis R durch eine Instanz ermittelt worden sein, die Zugriff auf den privaten Schlüssel, K_priv, hatte, sonst hätte die Signatur S (S (R, FI)) nicht korrekt bestimmt werden können. Dementsprechend wird das Ergebnis R bei erfolgreicher Überprüfung der Signatur S von dem ersten System Sys_1 als gültig betrachtet.

Die Signatur mit dem privaten Schlüssel, K_priv, wird in F₂ durch geeignet obfuszierten Code F_{2_obf} durchgeführt. Hiermit wird sichergestellt, dass der private Schlüssel, K_priv, selbst nicht ohne Weiteres im Klartext durch einen Angreifer aus F_{2_obf} extrahiert werden kann.

Es ist prinzipiell möglich, die obfuszierte Implementierung F_{2_obf} aus der Funktion, F, zu isolieren und als "Black Box" zur Signatur S, (S (R', FI)) eines vom Angreifer, A, gefälschten Ergebnisses R' zum Funktionseingangsparameter, FI, zu missbrauchen. Ein solches Verfahren ist als "Codelifting" bekannt. Das Angriffsszenario ist in der Fig. 1 dargestellt. In Fig. 1 ist im linken Graphen die Implementierung der Funktion, F₁, die nicht obfusziert sein muss, und die Funktion, F₂, die obfusziert ist, dargestellt. Im Rahmen ihrer Implementierung sind beide Funktionen F₁, F₂ klar voneinander getrennt, was einen normalen Anwendungsfall darstellt.

In einem Schritt C1 empfängt ein zweites System Sys_2 vom einem ersten System Sys_1 einen Funktionseingangsparameter FI beispielsweise Daten zur Berechnung, welche mit einer implementierten Funktion, F_obf, auf Basis einer Funktionalität f berechnet werden.

Der Funktionseingangsparameter FI wird in einem Schritt C2 an die Funktion F, übergeben und ein Ergebnis R auf Basis des Funktionseingangsparameters FI und der Funktionalität f berechnet (R=f(FI)).

In einem weiteren Schritt C3 wird das Ergebnis R mit F_{2_obf}, der obfuszierten Implementierung von F₂, signiert. Der Funktionseingangsparameter FI wird dabei zur Berechnung der Signatur S in diese mit aufgenommen. Das zweite System Sys_2 stellt dem ersten System Sys_1 das Ergebnis R mit einer Signatur S (eine Funktion S(R, FI)) bereit. Dieser Vorgang entspricht dem normalen Anwendungsfall ohne Manipulation oder Angriff.

Der auf der rechten Seite der Fig. 1 dargestellte Graph stellt den Angriff "Codelifting" dar. Hierbei hat ein Angreifer A die Absicht, an das erste System Sys_1 ein manipuliertes bzw. verfälschtes, aber korrekt signiertes Ergebnis R' zurückzuschicken.

Hierfür muss der Angreifer, A, in einem Schritt C1' die obfuszierte Implementierung von F2, nämlich F_{2_obf} als Black-box aus dem Code heraustrennen. Dabei muss der Angreifer, A, die Implementierung nicht verstehen. Er muss nur an der Stelle des aus dem Funktionseingangsparameter FI (Schritt C2') korrekt berechneten Ergebnisses R ein gefälschtes Ergebnis R' einsetzen (Schritt C3'), welches der Angreifer A beispielsweise derart wählt, dass das gefälschte Ergebnis R' dem ersten System Sys_1 einen maximalen Schaden zufügt.

Der Angreifer A kann mit Hilfe der herausgetrennten Funktion F_{2_obf} eine aus der Sicht des ersten Systems Sys_1 korrekte Signatur S mit dem gefälschten Ergebnis R' und dem Funktionseingangsparameter FI bestimmen (Schritt C4') und diese dem ersten System Sys_1 bereitstellen (Schritt C5'). Das erste System Sys_1 hat keine Möglichkeit, das gefälschte Ergebnis R' zu erkennen da in dem bereitgestellten Ergebnis (gefälschtes Ergebnis R') an das erste System Sys_1 durch das zweite System Sys_2 der Funktionseingangsparameter FI und die Signatur S auf Basis des Funktionseingangsparameter FI enthalten ist. Die Signatur S und der Funktionseingangsparameter FI sind korrekt, sodass das erste System Sys_1 von einem korrekt bereitgestellten Ergebnis ausgehen wird.

Fig. 2 veranschaulicht die Berechnung der Funktionen, F₁, F_{2_obf}, in einem gemeinsam obfuszierten Funktionsblock, F_obf nach dem erfindungsgemäßen Verfahren.

Um Codelifting zu unterbinden, wird hierbei die Funktionalität f in der implementierten obfuszierten Funktion F_obf ebenfalls obfusziert berechnet. Dabei wird die Obfuskation übergreifend sowohl auf die Berechnung der Funktionalität f als auch auf die Signatur S angewendet, so dass die beiden Funktionen F₁, F₂ aus Sicht eines Angreifers A zu einem nicht mehr trennbaren obfuszierten Funktionsblock F_obf verschmolzen sind. Dieser nimmt den Funktionseingangsparameter FI entgegen und gibt als Ausgangswert ein Ergebnis R, (R=f(FI)), den zur Berechnung des Ergebnisses R verwendeten Funktionseingangsparameter FI sowie eine Signatur S, (S(f(FI), FI)) aus.

Im Gegensatz zu dem in Fig. 1 dargestellten Verfahren liegen die Funktionen F₁, F₂ in dem in der Fig. 2 dargestellten Verfahren nicht mehr getrennt vor. Das zweite System Sys_2 empfängt von einem ersten System Sys_1 einen Funktionseingangsparameter FI (Schritt B1). Der obfuszierte Funktionsblock F_obf nimmt den Funktionseingangsparameter FI in einem Schritt B2 entgegen und berechnet das Ergebnis R und gleichzeitig die Signatur S. Ein potentieller Angreifer A kann somit die Signatur S nicht mehr extrahieren und ein gefälschtes Ergebnis R' mit der Signatur S signieren.

Es kann nur der vollständige obfuszierte Funktionsblock F_obf extrahiert werden. Da dieser so implementiert ist, dass dieser auf Basis des Funktionseingangsparameters FI das Ergebnis R und die Signatur S in einem Schritt berechnet, kann kein gefälschtes Ergebnis R' des obfuszierte Funktionsblocks F_obf untergeschoben werden. In vorteilhafter Weise ist somit der Angriff "Codelifting", dargestellt in der Fig. 1 mit dem Verfahren gemäß der vorliegenden Erfindung wie dargestellt in Fig. 2 nicht möglich.

Zudem wird eine Signatur S mit einem privaten Schlüssel, K_priv, bereitgestellt. Der private Schlüssel, K_priv, wird durch die vorliegende Erfindung derart geschützt, so dass dieser durch das zweite System Sys_2 nicht zur Manipulation verwendet werden kann, um eventuell gefälschte Ergebnisse R' zu signieren.

Das Verschmelzen der Funktionalität f mit dem Signaturschritt in einer gemeinsamen obfuszierten Implementierung erzeugt einen aus Sicht des Angreifers A untrennbaren Funktionsblock F_obf der es lediglich ermöglicht, zu einem Funktionseingangsparameter FI eine korrekte Ausgabe R, FI, S, mit R=f(FI), den zur Berechnung des Ergebnisses R verwendeten Funktionseingangsparameter FI und eine Signatur S=S(f(FI),FI) dargestellt in Fig. 2, Schritt B3, zu berechnen und an das erste System Sys_1 bereitzustellen.

Es ist einem Angreifer A somit nicht ohne weiteres möglich, den Signaturteil aus dem Funktionsblock F_obf zu isolieren und zur Berechnung einer gefälschten Ausgabe R', S' mit einem vom Angreifer A frei gewählten und gefälschten Ergebnis R' und gefälschter Signatur S, (S=S(R', FI)) zu nutzen. Zudem ist die Verwendung eines anderen als des vorgegebenen Funktionseingangsparameters FI nicht möglich, da dieser in der Antwort an das erste System Sys_1 enthalten ist und in die Berechnung der Signatur S mit einfließt. Somit kann das erste System Sys_1 darauf vertrauen, dass jede korrekte Ausgabe R FI, S, auch tatsächlich wie gewünscht durch die implementierte Funktion F_obf auf Seiten des zweiten Systems Sys_2 berechnet wurde. Das hiermit bereitgestellte Vertrauen macht in vorteilhafter Weise weitere unabhängige Parteien, beispielsweise weitere nicht vertrauenswürdige Systeme, wie dies bei "Verification by Replication" notwendig ist, überflüssig.

Zudem hat es den Vorteil, dass Berechnungen geschützt auf Systeme, die nicht vertrauenswürdig sind, ausgelagert werden können. Dem Ergebnis R was bereitgestellt wird, kann vertraut werden, weil es von einer bestimmten Implementierung berechnet wurde und diese Implementierung durch Obfuskation für Dritte unverständlich ist und somit keine Manipulation erfolgen kann.

Zudem wird für die Obfuskation weniger Rechenleistung und weniger Speicherplatz benötigt, als bei vergleichbaren Verfahren. Zudem kann mittels Obfuskation ein Schutzanspruch (Sicherheit) gemäß dem notwendigen Nutzen und Leistung gewählt werden.

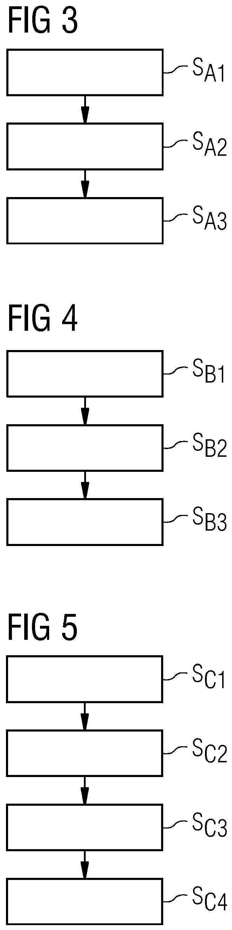

Wie man aus Fig. 3 erkennen kann, umfasst das Verfahren gemäß dem ersten Aspekt der Erfindung bei einer möglichen Ausführungsform mehrere Hauptschritte S_{A1} bis S_{A3}. Bei dem in Fig. 3 dargestellten Ausführungsbeispiel umfasst das Verfahren zur nachweisbaren Datenverarbeitung wenigstens eines Funktionseingangsparameters FI mittels einer implementierten Funktion, F, auf Basis einer Funktionalität f unter Anwendung von Obfuskation und einer Signatur S drei Hauptschritte.

In einem ersten Schritt S_{A1} wird durch ein erstes System Sys_1 ein Funktionseingangsparameter FI und eine implementierte Funktion F obf auf der Basis einer Funktionalität f für ein zweites System Sys_2 bereitgestellt. Das erste System Sys_1 kann beispielsweise ein vertrauenswürdiges System sein und das zweite System Sys_2 kann beispielsweise ein nicht vertrauenswürdiges System sein.

In einem zweiten Schritt S_{A2} wird durch das erste System Sys_1 ein Ergebnis R einer Funktionalität f in Abhängigkeit eines Funktionseingangsparameters FI der zur Berechnung des Ergebnisses R verwendete Funktionseingangsparameter FI und eine Signatur S über das Ergebnis R und den Funktionseingangsparameter FI in Abhängigkeit eines in der implementierten Funktion F_obf integrierten Schlüssels KI empfangen.

Der integrierte Schlüssel, KI, umfasst in einer Ausführungsform einen privaten Schlüssel, K_priv.

In einer weiteren Ausführungsform ist der integrierte Schlüssel, KI, ein Schlüssel zur Berechnung eines Nachrichtenauthentifizierungscodes, MAC. Der Nachrichtenauthentifizierungscode, MAC, wird auf Basis eines geheimen Schlüssels, K_symm, berechnet.

In einem weiteren Schritt S_{A3} wird die in dem obfuszierten Funktionsblock F_obf enthaltene Signatur S durch das erste System Sys_1 mit einem zu dem integrierten Schlüssel, KI, zugehörigen weiteren Überprüfungsschlüssel, KU, überprüft.

In einer Ausführungsform umfasst der Überprüfungsschlüssel, KU, einen öffentlichen Schlüssel, K_pub.

In einer weiteren Ausführungsform umfasst der Überprüfungsschlüssel, KU, einen geheimen Schlüssel, K_symm.

Wie man aus Fig. 4 erkennen kann, umfasst das Verfahren gemäß dem zweiten Aspekt der Erfindung bei einer möglichen Ausführungsform mehrere Hauptschritte S_{B1} bis S_{B3}. Bei dem in Fig. 4 dargestellten Ausführungsbeispiel umfasst das Verfahren zur nachweisbaren Datenverarbeitung wenigstens eines Funktionseingangsparameters FI mittels einer implementierten Funktion F_obf auf Basis einer Funktionalität f unter Anwendung von Obfuskation und einer Signatur S drei Hauptschritte.

In einem ersten Schritt S_{B1} empfängt ein zweites System Sys_2 wenigstens einen Funktionseingangsparameter FI und eine implementierte Funktion F_obf auf Basis einer Funktionalität f von einem ersten System Sys_1. Das zweite System Sys_2 kann beispielsweise ein nicht vertrauenswürdiges System sein, das die notwendigen Ressourcen zur Berechnung der Funktionalität f zur Verfügung hat. Das erste System Sys_1 kann beispielsweise ein vertrauenswürdiges System sein, das die benötigten Ressourcen zur Berechnung der Funktionalität f nicht zur Verfügung hat. Ferner kann die Auslagerung der Berechnung der Funktionalität f aufgrund von aktuell fehlender freier Rechenkapazität des ersten Systems Sys_1 erfolgen.

In einem zweiten Schritt S_{B2} wird auf dem zweiten System Sys_2 die empfangene implementierte Funktion F_obf auf Basis der Funktionalität f ausgeführt. Die implementierte Funktion F_obf kann für eine Vielzahl an Berechnungen der Funktionalität f und mit unterschiedlichen Funktionseingangsparametern FI verwendet werden. Mit der Ausführung der implementierten Funktion F_obf wird ein Ergebnis R der Funktionalität f in Abhängigkeit des Funktionseingangsparameters FI in einem ersten Berechnungsabschnitt F_1 der implementierten Funktion F_obf berechnet. Ferner umfasst das Ausführen der implementierten Funktion F_obf ein Berechnen einer Signatur S über das Ergebnis R und den Funktionseingangsparameter FI in Abhängigkeit von einem in der implementierten Funktion F_obf integrierten Schlüssel, KI, in einem zweiten Berechnungsabschnitt F_2 der implementierten Funktion F_obf.

Die beiden Berechnungsabschnitte F₁, F₂, werden nicht mehr getrennt voneinander in einer Funktion, F₁, und in einer Funktion, F₂, berechnet, sondern werden in einem zusammenhängenden obfuszierten Funktionsblock F_obf bereitgestellt. Der obfuszierte Funktionsblock F_obf empfängt den Funktionseingangsparameter FI zur Berechnung des Ergebnisses R und umfasst zudem die Berechnung der Signatur S in Abhängigkeit des Ergebnisses R und des Funktionseingangsparameters FI. Dies hat den Vorteil, dass die Signatur S, nicht mehr separat für eine Manipulation extrahiert werden kann, sondern nur der gesamte obfuszierte Funktionsblock F_obf. Dieser ist derart aufgebaut, dass zu einem Funktionseingangsparameter FI ein Ergebnis R und eine Signatur S nicht mehr in aufeinander folgenden Schritten berechnet werden, sondern in parallelen Schritten, vorzugsweise in einem Schritt, zu einem obfuszierten Funktionsblock F_obf berechnet werden. Vorteilhafterweise kann somit kein Ergebnis R manipuliert werden, bzw. durch ein verfälschtes Ergebnis R' ersetzt werden.

Ferner umfasst das Ausführen der implementierten Funktion F_obf ein Bereitstellen des Ergebnisses R, des zur Berechnung des Ergebnisses R verwendeten Funktionseingangsparameters FI, und der Signatur S über das Ergebnis R und den Funktionseingangsparameter, FI, (R=f(FI), FI, S(R=f(FI), FI).

In einem weiteren Schritt S_{B3} wird das Ergebnis R der zur Berechnung des Ergebnisses R verwendete Funktionseingangsparameter FI und die Signatur S (S(f(FI), FI)) durch das zweite System Sys_2 an das erste System Sys_1 gesendet.

Wie man aus Fig. 5 erkennen kann, umfasst das Verfahren gemäß dem dritten Aspekt der Erfindung bei einer möglichen Ausführungsform mehrere Hauptschritte S_{C1} bis S_{C4}. Bei dem in Fig. 5 dargestellten Ausführungsbeispiel umfasst das Verfahren zur nachweisbaren Datenverarbeitung wenigstens eines Funktionseingangsparameters FI mittels einer implementierten Funktion F_obf auf Basis einer Funktionalität f unter Anwendung von Obfuskation und einer Signatur S vier Hauptschritte.

In einem ersten Schritt S_{C1} wird durch ein erstes System Sys_1 ein Funktionseingangsparameter FI und eine implementierte Funktion F_obf auf Basis der Funktionalität f für ein zweites System Sys_2 bereitgestellt. Das erste System Sys_1 kann beispielsweise ein vertrauenswürdiges System sein und das zweite System Sys_2 kann beispielsweise ein nicht vertrauenswürdiges System sein.

In einem zweiten Schritt S_{C2} wird auf dem zweiten System Sys_2 die implementierte Funktion F_obf auf Basis der Funktionalität f ausgeführt. Mit der Ausführung der implementierten Funktion F_obf wird ein Ergebnis R der Funktionalität f in Abhängigkeit des Funktionseingangsparameters FI in einem ersten Berechnungsabschnitt F₁ der implementierten Funktion, F_obf berechnet. Ferner umfasst das Ausführen der implementierten Funktion F_obf ein Berechnen einer Signatur S über das Ergebnis R und den Funktionseingangsparameter FI in Abhängigkeit eines in der implementierten Funktion F_obf integrierten Schlüssels, KI, in einem zweiten Berechnungsabschnitt F₂ der implementierten Funktion, F_obf. Ferner umfasst das Ausführen der implementierten Funktion F_obf ein Bereitstellen des Ergebnisses R des Funktionseingangsparameters FI und der Signatur S.

In einem weiteren Schritt S_{C3} wird durch das erste System Sys_1 ein Ergebnis R errechnet aus dem Funktionseingangsparameter FI mittels der Funktionalität f der Funktionseingangsparameter FI und eine Signatur S über das Ergebnis R und den Funktionseingangsparameter FI in Abhängigkeit eines in der implementierten Funktion F_obf integrierten Schlüssels, KI, empfangen.

Der integrierte Schlüssel, KI, umfasst in einer Ausführungsform einen privaten Schlüssel, K_priv.

In einer weiteren Ausführungsform ist der integrierte Schlüssel, KI, ein Schlüssel zur Berechnung eines Nachrichtenauthentifizierungscodes, MAC, und wird auf Basis eines geheimen Schlüssels, K_symm, berechnet.

In einem weiteren Schritt SC4 wird die im Schritt S_{C3} empfangene Signatur S durch das erste System Sys_1 mit einem zu dem integrierten Schlüssel, KI, zugehörigen weiteren Überprüfungsschlüssel, KU, überprüft.

In einer Ausführungsform umfasst der Überprüfungsschlüssel, KU, einen öffentlichen Schlüssel, K_pub.

In einer weiteren Ausführungsform umfasst der Überprüfungsschlüssel, KU, einen geheimen Schlüssel, K_symm.

Das Verfahren gemäß einem der Patentansprüche 1 bis 3 kann in vorteilhafter Weise in verschiedenen Szenarien eingesetzt werden.

In einem möglichen Szenario erfolgt das Auslagern von Berechnungen auf ein nicht vertrauenswürdiges System, beispielsweise in die Cloud. Ein Auslagern kann beispielsweise aus Ressourcengründen erfolgen. In einem beispielhaften Szenario werden durch Sensoren Daten über ein System gesammelt und zur weiteren Verarbeitung und Berechnung an ein nicht vertrauenswürdiges System gesendet, da die Sensoren selbst nicht die Ressourcen für die Verarbeitung und Berechnung zur Verfügung stellen. Durch die vorliegende Erfindung kann dem berechneten Ergebnis, das durch das nicht vertrauenswürdige System bereitgestellt wird, vertraut werden.

In einem weiteren Szenario soll beispielsweise durch ein erstes System Sys_1 (Firma A) sichergestellt werden, dass auf Seite eines zweiten Systems Sys_2 (Firma B - Kunde) in gewissen, beispielsweise nicht spezifizierten und unregelmäßigen Abständen eine Funktion f(FI, FU) ausgeführt wird, in die sowohl der Firma A - seitige Funktionseingangsparameter FI (Daten der Firma A) als auch Firma A unbekannte weitere Funktionseingangsparameter, FU (Kundenparameter der Firma B) eingehen.

Dies umfasst beispielsweise die Kontrolle der korrekten Abrechnung von Lizenzen, z.B. mit einem Funktionseingangsparameter FI (Daten) als Einmallizenz der Firma A für die Firma B (Kunde) zur Anwendung einer Software, F, der Firma A auf einen Funktionseingangsparameter, FU, der Firma B (Daten des Kunden). Mittels der implementierten Funktion F_obf wird durch geeignete Maßnahmen verhindert, dass diese Lizenz von der Firma B mehrfach für verschiedene Funktionseingangsparameter FU genutzt werden kann. Dies kann beispielsweise durch das Hochzählen eines Zählers, der durch Firma B nicht ohne Weiteres manipulierbar ist, realisiert werden. Dieser kann am Ende für eine Abrechnung herangezogen werden.

In einem weiteren Szenario bestellt eine Firma B (Kunde) eine Software bei der Firma A, um eine Berechnung durchzuführen. Die Firma B benötigt für die Ausführung der Software eine Lizenz, die durch die Firma A über einen Funktionseingangsparameter, FI, bereitgestellt wird. Der Funktionseingangsparameter, FI, muss (vertraglich vereinbart) in die Berechnung mit eingehen und das Ergebnis bzw. die Ausgabe der Software muss der Firma A bereitgestellt werden. Durch das Ergebnis erhält die Firma A den Nachweis, dass eine Berechnung auf Seite der Firma B durchgelaufen ist und die Lizenz, bei einer Einmallizenz, erloschen ist. Die Firma B muss somit für eine erneute Berechnung eine neue Lizenz von der Firma A erwerben.

In einem weiteren möglichen Szenario können Wartungsaktionen, wie beispielsweise Softwareupdates, Sicherheitsüberprüfungen oder Checks für "predictive maintenance" bei einem Kunden erzwungen werden.

In einem weiteren möglichen Szenario kann der korrekte Ablauf von Anwendungen auf einem Kundensystem (Firma B) verifiziert werden, um die Runtime Integrität einer von der Firma A ausgelieferten Software und/oder Hardware sicherzustellen.

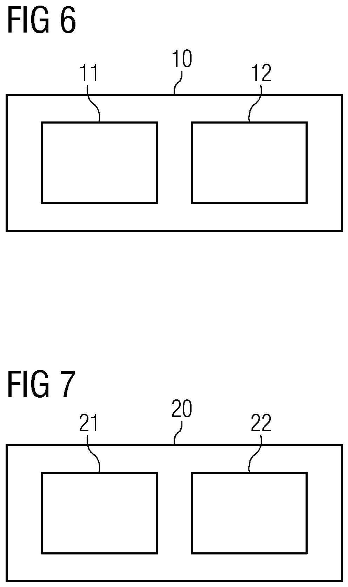

Fig. 6 veranschaulicht ein System 10 zur nachweisbaren Datenverarbeitung wenigstens eines Funktionseingangsparameters FI mittels einer implementierten Funktion F_obf auf Basis einer Funktionalität f unter Anwendung von Obfuskation und einer Signatur S. Das System umfasst eine Schnittstelle 11, welche ausgebildet ist, wenigstens einen Funktionseingangsparameters FI und eine implementierte Funktion F_obf auf Basis einer Funktionalität f bereitzustellen und ein Ergebnis R einer Funktionalität f in Abhängigkeit eines Funktionseingangsparameters FI den zur Berechnung des Ergebnisses R verwendeten Funktionseingangsparameter FI und eine Signatur S über das Ergebnis R und den Funktionsparameter FI in Abhängigkeit eines in einer implementierten Funktion F_obf integrierten Schlüssels, KI, zu empfangen.

Ferner umfasst das System 10 eine Prozessoreinheit 12, welche ausgebildet ist, die mit dem Ergebnis R und dem zur Berechnung des Ergebnisses R verwendeten Funktionseingangsparameter FI empfangene Signatur S mit einem zu dem integrierten Schlüssel KI zugehörigen weiteren Überprüfungsschlüssel KU zu überprüfen.

In einer Ausführungsform umfasst das System 10 eine Speichereinheit (nicht dargestellt), beispielsweise eine Festplatte, RAM, ROM, und/oder ein externes mit dem System 10 verbundenes Speichermedien zur Speicherung eines integrierten Schlüssels, KI.

In einer weiteren Ausführungsform kann der integrierte Schlüssel, KI, auf einem externen Speichermedium, beispielsweise in einer Cloud ausgelagert sein, zu dem über die Schnittstelle 11 eine Verbindung hergestellt werden kann.

Das System 10 ist gemäß einer Ausführungsform ausgebildet, das Verfahren gemäß des Patentanspruchs 1 auszuführen.

Fig. 7 veranschaulicht ein System 20 zur nachweisbaren Datenverarbeitung wenigstens eines Funktionseingangsparameters, FI, mittels einer implementierten Funktion F_obf auf Basis einer Funktionalität f unter Anwendung von Obfuskation und einer Signatur, S. Das System umfasst eine Schnittstelle 21, welche ausgebildet ist, einen Funktionseingangsparameter FI und eine implementierte Funktion F_obf auf Basis einer Funktionalität f von einem ersten System Sys_1 zu empfangen und ein Ergebnis R den zur Berechnung des Ergebnis R verwendeten Funktionseingangsparameter FI und eine Signatur S über das Ergebnis R und den Funktionseingangsparameter FI an das erste System Sys_1 zu senden.

Ferner umfasst das System 20 eine Prozessoreinheit 22, welche ausgebildet ist, ein Ergebnis R der Funktionalität f in Abhängigkeit des Funktionsparameters KI in einem ersten Berechnungsabschnitt F₁ der implementierten Funktion F_obf zu berechnen.

Ferner ist die Prozessoreinheit 22 ausgebildet, eine Signatur S über das Ergebnis R und den Funktionseingangsparameter FI in Abhängigkeit von einem in der implementierten Funktion, F_obf, integrierten Schlüssel, KI, in einem zweiten Berechnungsabschnitt, F₂, der implementierten Funktion F_obf zu berechnen.

In einer Ausführungsform umfasst das System 20 eine Speichereinheit (nicht dargestellt), beispielsweise eine Festplatte, RAM, ROM, und/oder ein externes mit dem System 20 verbundenes Speichermedien zur Speicherung eines integrierten Schlüssels, KI.

In einer weiteren Ausführungsform kann der integrierte Schlüssel, KI, auf einem externen Speichermedium, beispielsweise in einer Cloud ausgelagert sein, zu dem über die Schnittstelle 11 eine Verbindung hergestellt werden kann.

Das System 20 ist gemäß einer Ausführungsform ausgebildet, das Verfahren gemäß des Patentanspruchs 2 auszuführen.

Aspekte der Erfindung lassen sich wie folgt zusammenfassen:
Verfahren zur nachweisbaren Datenverarbeitung wenigstens eines Funktionseingangsparameters FI mittels einer implementierten Funktion F_obf auf Basis einer Funktionalität f unter Anwendung von Obfuskation und einer Signatur S mit einem Schritt zum Bereitstellen S_{C1} wenigstens eines Funktionseingangsparameters FI und einer implementierten Funktion F_obf auf Basis einer Funktionalität f durch ein erstes System Sys_1 an ein zweites System Sys_2. Das Verfahren umfasst ferner ein Ausführen S_{C2} einer implementierten Funktion F_obf auf Basis der Funktionalität f auf dem zweiten System Sys_2. Das Ausführen der implementierten Funktion F_obf umfasst ein Berechnen eines Ergebnisses R der Funktionalität f in Abhängigkeit des Funktionseingangsparameters FI in einem ersten Berechnungsabschnitt F_1 der implementierten Funktion F obf. Zudem erfolgt das Berechnen einer Signatur S über das Ergebnis R und den Funktionseingangsparameter FI in Abhängigkeit eines in der implementierten Funktion F_obf integrierten Schlüssels KI in einem zweiten Berechnungsabschnitt F₂, der implementierten Funktion F_obf. Ferner erfolgt das Bereitstellen eines Ergebnisses R des zur Berechnung des Ergebnisses R verwendeten Funktionseingangsparameters FI und der Signatur S. Zudem umfasst das Verfahren ein Empfangen S_{C3} des Ergebnisses R des Funktionseingangsparameters FI und der Signatur S durch das erste System Sys_1. Ferner umfasst das Verfahren ein Überprüfen S_{C4} der empfangenen Signatur S mit einem zu dem integrierten Schlüssel KI zugehörigen weiteren Überprüfungsschlüssel KU durch das erste System Sys_1.

## Patentansprüche

1. Verfahren zur nachweisbaren Datenverarbeitung wenigstens eines Funktionseingangsparameters (FI) mittels einer implementierten Funktion (F_obf) auf Basis einer Funktionalität (f) unter Anwendung von Obfuskation und einer Signatur (S) umfassend die folgenden Schritte:
- Bereitstellen (S_{A1}) durch ein erstes System (Sys_1) wenigstens eines Funktionseingangsparameters (FI) und einer implementierten Funktion (F_obf) auf Basis einer Funktionalität (f) an ein zweites System (Sys_2);
- Empfangen (S_{A2}) eines berechneten Ergebnisses (R) einer Funktionalität (f) in Abhängigkeit eines Funktionseingangsparameters (FI) des zur Berechnung des Ergebnisses (R) verwendeten Funktionseingangsparameters (FI) und einer Signatur (S) über das Ergebnis (R) und den Funktionseingangsparameter (FI) in Abhängigkeit eines in der implementierten Funktion (F_obf) integrierten Schlüssels, KI, durch das erste System (Sys_1) von dem zweiten System (Sys_2);
- Überprüfen (S_{A3}) durch das erste System (Sys_1) der mit dem Ergebnis (R) und dem zur Berechnung des Ergebnisses (R) verwendeten Funktionseingangsparameter (FI) empfangenen Signatur (S) mit einem zu dem integrierten Schlüssel, KI, zugehörigen weiteren Überprüfungsschlüssel, KU.

2. Verfahren zur nachweisbaren Datenverarbeitung wenigstens eines Funktionseingangsparameters (FI) mittels einer implementierten Funktion (F_obf) auf Basis einer Funktionalität (f) unter Anwendung von Obfuskation und einer Signatur (S) umfassend die folgenden Schritte:
- Empfangen (S_{B1}) durch ein zweites System (Sys_2) wenigstens eines Funktionseingangsparameters (FI) und einer implementierten Funktion (F_obf) auf Basis einer Funktionalität (f) von einem ersten System (Sys_1);
- Ausführen (S_{B2}) durch das zweite System (Sys_2) der implementierten Funktion (F_obf) auf Basis der Funktionalität (f) umfassend:
o Berechnen eines Ergebnisses (R) der Funktionalität (f) in Abhängigkeit des Funktionseingangsparameters (FI) in einem ersten Berechnungsabschnitt (F₁) der implementierten Funktion (F_obf);
o Berechnen einer Signatur (S) über das Ergebnis (R) und den Funktionseingangsparameter (FI) in Abhängigkeit eines in der implementierten Funktion (F_obf) integrierten Schlüssels, KI, in einem zweiten Berechnungsabschnitt (F₂), der implementierten Funktion, F_obf;
o Bereitstellen des Ergebnisses (R) des zur Berechnung des Ergebnisses (R) verwendeten Funktionseingangsparameters (FI) und der Signatur, S;
- Senden (S_{B3}) des Ergebnisses (R) des zur Berechnung des Ergebnisses (R) verwendeten Funktionseingangsparameter (FI) und der Signatur (S) an das erste System (Sys_1).

3. Verfahren zur nachweisbaren Datenverarbeitung wenigstens eines Funktionseingangsparameters (FI) mittels einer implementierten Funktion (F_obf) auf Basis einer Funktionalität (f) unter Anwendung von Obfuskation und einer Signatur (S) umfassend die folgenden Schritte:
- Bereitstellen (S_{C1}) wenigstens eines Funktionseingangsparameters (FI) und einer implementierten Funktion (F_obf) auf Basis einer Funktionalität (f) durch ein erstes System (Sys_1) an ein zweites System (Sys_2);
- Ausführen (S_{C2}) der implementierten Funktion (F_obf) auf Basis der Funktionalität (f) auf dem zweiten System (Sys_2) umfassend:
o Berechnen eines Ergebnisses (R) der Funktionalität (f) in Abhängigkeit des Funktionseingangsparameters (FI) in einem ersten Berechnungsabschnitt (F₁), der implementierten Funktion (F_obf);
o Berechnen einer Signatur (S) über das Ergebnis (R) und den Funktionseingangsparameter (FI) in Abhängigkeit eines in der implementierten Funktion (F_obf) integrierten Schlüssels, KI, in einem zweiten Berechnungsabschnitt (F₂) der implementierten Funktion (F_obf);
o Bereitstellen des Ergebnisses (R) des zur Berechnung des Ergebnisses (R) verwendeten Funktionseingangsparameters (FI) und der Signatur (S);
- Empfangen (S_{C3}) des berechneten Ergebnisses (R) einer Funktionalität (f) in Abhängigkeit eines Funktionseingangsparameters (FI) des zur Berechnung des Ergebnisses (R) verwendeten Funktionseingangsparameters (FI) und der Signatur (S) über das Ergebnis (R) und den Funktionsparameter (FI) in Abhängigkeit des in der Funktion (F_obf) integrierten Schlüssels, KI, durch das erste System (Sys_1);
- Überprüfen (S_{C4}) der mit dem Ergebnis (R) und dem zur Berechnung des Ergebnisses (R) verwendeten Funktionseingangsparameter (FI) empfangenen Signatur (S) mit einem zu dem integrierten Schlüssel, KI, zugehörigen weiteren Überprüfungsschlüssel, KU, durch das erste System (Sys_1).

4. Verfahren nach einem der vorhergehenden Ansprüche 1 bis 3, wobei Teile der Funktionalität (f) in der implementierten Funktion (F_obf) obfusziert werden.

5. Verfahren nach einem der vorhergehenden Ansprüche 1 bis 3, wobei die Funktionalität (f) in der implementierten Funktion (F_obf) obfusziert wird.

6. Verfahren nach einem der vorhergehenden Ansprüche 1 bis 5, wobei der in der implementierten Funktion (F_obf) integrierte Schlüssel, KI, obfusziert wird.

7. Verfahren nach einem der vorhergehenden Ansprüche 1 bis 6, wobei der integrierte Schlüssel, KI, ein privater Schlüssel, K_priv, und der Überprüfungsschlüssel, KU, ein öffentlicher Schlüssel, K_pub, ist.

8. Verfahren nach einem der vorhergehenden Ansprüche 1 bis 7, wobei der integrierte Schlüssel, KI, und der Überprüfungsschlüssel, KU, Schlüssel zur Berechnung eines Nachrichtenauthentifizierungscodes, MAC, sind.

9. Verfahren nach Anspruch 8, wobei der Nachrichtenauthentifizierungscode, MAC, auf Basis eines geheimen Schlüssels, K_symm, berechnet wird.

10. Verfahren nach einem der vorhergehenden Ansprüche 1 bis 9, wobei die Berechnung des Ergebnisses (R) der Funktionalität (f) in Abhängigkeit eines weiteren Funktionseingangsparameters, FU, erfolgt, wobei der weitere Funktionseingangsparameter, FU, durch das zweite System (Sys_2) bereitgestellt wird.

11. Verfahren nach einem der vorhergehenden Ansprüche 1 bis 10, wobei das Ergebnis (R) der Funktionalität (f) in Abhängigkeit des Funktionseingangsparameters (FI) wenigstens ein weiteres Mal, als ein weiteres Ergebnis berechnet wird.

12. Verfahren nach Anspruch 11, wobei die Signatur (S) über das weitere Ergebnis und den Funktionseingangsparameter (FI) in Abhängigkeit eines in der implementierten Funktion (F_obf) integrierten Schlüssels, KI, in einem zweiten Berechnungsabschnitt der implementierten Funktion (F_obf) berechnet wird.

13. Verfahren nach einem der vorhergehenden Ansprüche 1 bis 11, wobei für das Ergebnis (R) in einem ersten Berechnungsschritt ein Zwischenergebnis berechnet wird und in einem zweiten Berechnungsschritt ausgehend von dem Zwischenergebnis das Ergebnis (R) nur implizit in die Berechnung der Signatur (S) eingeht.

14. System (10) zur nachweisbaren Datenverarbeitung wenigstens eines Funktionseingangsparameters (FI) mittels einer implementierten Funktion (F_obf) auf Basis einer Funktionalität (f) unter Anwendung von Obfuskation und einer Signatur (S) umfassend:
- eine Schnittstelle (11), welche ausgebildet ist, wenigstens einen Funktionseingangsparameters (FI) und eine implementierte Funktion (F_obf) auf Basis einer Funktionalität (f) für ein zweites System (Sys_2) bereitzustellen und ein Ergebnis (R) einer Funktionalität (f) in Abhängigkeit eines Funktionseingangsparameters (FI) den zur Berechnung des Ergebnisses (R) verwendeten Funktionseingangsparameter (FI) und eine Signatur (S) über das Ergebnis (R) und den Funktionsparameter (FI) in Abhängigkeit eines in der implementierten Funktion (F_obf) integrierten Schlüssels, KI, von dem zweiten System (Sys_2) zu empfangen;
- eine Prozessoreinheit (12), welche ausgebildet ist, die mit dem Ergebnis (R) und dem zur Berechnung des Ergebnisses (R) verwendeten Funktionseingangsparameters (FI) empfangene Signatur (S) mit einem zu dem integrierten Schlüssel, KI, zugehörigen weiteren Überprüfungsschlüssel, KU, zu überprüfen.

15. System (20) zur nachweisbaren Datenverarbeitung wenigstens eines Funktionseingangsparameters (FI) mittels einer implementierten Funktion (F_obf) auf Basis einer Funktionalität (f) unter Anwendung von Obfuskation und einer Signatur (S) umfassend:
- eine Schnittstelle (21), welche ausgebildet ist, einen Funktionseingangsparameter (FI) und eine implementierte Funktion (F_obf) auf Basis einer Funktionalität (f) von einem ersten System (Sys_1) zu empfangen und ein Ergebnis (R) den zur Berechnung des Ergebnisses (R) verwendeten Funktionseingangsparameter (FI) und eine Signatur (S) über das Ergebnis (R) und den Funktionseingangsparameter (FI) an das erste System (Sys_1) zu senden;
- eine Prozessoreinheit (22), welche ausgebildet ist, ein Ergebnis (R) der Funktionalität (f) in Abhängigkeit des Funktionsparameters, KI, in einem ersten Berechnungsabschnitt (F₁), der implementierten Funktion (F_obf) zu berechnen;
eine Signatur (S) über das Ergebnis (R) und des Funktionseingangsparameters (FI) in Abhängigkeit eines in der implementierten Funktion (F_obf) integrierten Schlüssels, KI, in einem zweiten Berechnungsabschnitt (F_{2_obf}), der implementierten Funktion (F_obf) zu berechnen.
